# EUROPEAN PATENT SPECIFICATION

(11) **EP 3 386 361 B1**
(45) Date of publication and mention of the grant of the patent: **23.02.2022**
(21) Application number: 16813123.3
(22) Date of filing: 07.12.2016
(51) Int. Cl.: A47J 43/07

(54) **NON HEATING FOOD PROCESSOR**
NICHT HEIZENDE KÜCHENMASCHINE
ROBOT CULINAIRE NON CHAUFFANT

(30) Priority: 07.12.2015 GB 201521525
(43) Date of publication of application: 17.10.2018
(73) Proprietor: Kenwood Limited, Havant, Hampshire PO9 2NH (GB)
(72) Inventor: SHANMUGAM, Sivaprakesh, Havant Hampshire PO9 2NH (GB); HUNT, Martin, Havant Hampshire PO9 2NH (GB); SEIDLER, Mark, Havant Hampshire PO9 2NH (GB); COX, Jamie, Havant Hampshire PO9 2NH (GB)
(74) Representative: Hector, Annabel Mary
(86) International application number: PCT/GB2016/053847
(87) International publication number: WO 2017/098235

(56) References cited:
- WO-A2-2010/136711
- CN-Y- 201 150 445
- CN-Y- 201 256 893
- FR-A1- 2 578 159
- US-A- 5 031 518

## Description

This invention relates to a non heating food processor, more particularly to a removable heating element which can be introduced into an existing non-heating food processor to provide it with a heating function.

Food processors designed to chop, grate, shred, and otherwise comminute food in a container using rotary blades in preparation for further cooking processes have long been known. In recent years there has been a fashion for food processors to also incorporate a cooking function whereby they can heat food after processing. This heating function is typically achieved by means of an integral heating plate located in a base unit of the food processor that heats the container.

However, many food processors are supplied without integral heating plates. There is therefore a need for providing heating functionality for food processors lacking such an integral heating plate, whilst still allowing food comminution by the food processor to take place during heating.

CN 201256893 shows a food cooking machine comprising a base, a container, and a heating element.

US5031518 shows a kitchen appliance adapted to drive either a conventional chopping and slicing member in a receptacle at relatively high speed, or alternatively a heating mixing accessory at a relatively low speed.

Broadly, the invention provides a non heating food processor with a heater cassette comprising a heater element adapted to be removably introduced between the base unit and the food bowl of the food processor.

According to a first aspect of the present invention there is provided a non-heating food processor comprising a base unit and a food bowl, and a heater cassette for adapting the non-heating food processor for heating, the heater cassette being adapted to be removably introduced between the base unit and the food bowl of the food processor so as to transform the non-heating food processor into a heating food processor. The cassette may include a heater element. Alternatively, there may be a heater element provided in the food bowl. In either case the cassette may include control electronics for controlling the element.

The heater cassette may thus be arranged to adapt a food processor for heating either in addition to or instead of processing. The cassette preferably includes a drive adaptor arranged to selectively couple drive between the base and the bowl in order to adapt the the processor for both heating and processing. The cassette may have a power connection for supplying external power to the cassette, such as a mains connection. The cassette may also include a control arrangement for controlling heating of the bowl.

Preferably, the first or upper surface of the heater cassette is adapted to conform to the shape of the food bowl. The second or lower surface of the heater cassette may be adapted to conform to the shape of the base unit of the food processor. The upper surface of the heater cassette may substantially replicate various features of the upper surface of the base unit so that it may be fitted to the base unit and the processor may still be used in the usual way as before, with or without heating.

Preferably, the heater cassette further comprises a bowl locking mechanism to hold the food bowl in place on the heater cassette. Alternatively, or in addition, a base unit locking mechanism for holding the heater cassette in place on the base unit may be included. Such a mechanism may be the same mechanism which is alternatively used to hold the bowl in place when the heater cassette is not present. Preferably, the bowl and/or base unit locking mechanisms may operate an on/off switch on the heater cassette, thus functioning as a safety mechanism.

Preferably, the heater cassette further comprises a handle to facilitate attachment and detachment of the heater cassette from the base unit.

Preferably, the heater cassette is adapted to operate as a standalone heating device. The heater cassette may have a power supply such as a mains power connection, independent of the processor.

Preferably, the heater cassette further comprises a hole or opening (preferably a central opening) extending through from upper to lower surface of the heater cassette adapted to allow a drive shaft driven from the base unit to drive elements in the food bowl, or may comprise an integral drive shaft with couplings for coupling the drive outlet of the base unit to the food bowl drive elements. The heater cassette further may further comprise an adaptor to extend the reach of drive shaft through the heater cassette, preferably through the hole or opening. The adaptor may be integral to the heater cassette. Preferably, the adaptor is manufactured from a heat resistant and/or heat insulating material.

Preferably, the heater cassette comprises a thick film, inductive, resistive or radiative heating element, preferably thermally isolated from non-heat-resistant elements of the food processor. The heating element may be form a pattern centred on the hole.

Preferably, the heater cassette is powered wirelessly. Wireless power may be provided by one or more of: radiative, far field or non-radiative, near field power transmission. Wireless power may be provided by a power unit located in the base unit, and/or provided by a wireless power transmission hub, and/or supplied by induction.

Preferably, the heater cassette is powered by means of a battery or a supercapacitor.

Preferably, the heater cassette further comprises a power port. Power to the heating cassette may be provided via the power port.

Power may be provided from a mains supply or from a USB connection.

Preferably, the heater cassette further comprises an RFID tag. The RFID tag may be used to identify the heater cassette to one and/or other of the food processor base unit and food processor bowl.

Preferably, the heater cassette further comprises control circuitry for controlling operation of the heater element, either when it is integral with the cassette or with the bowl. The cassette may comprise a temperature sensor and a heater control, which in the latter case may be connectable to the bowl.

Preferably, the heater cassette further comprises communication circuitry for receiving and/or transmitting data to electronic components in the bowl and/or base unit or to a remote device. The remote device may comprise a computer running an app.

The communication may be via one or more of: wired, contactless, NFC, WiFi, Bluetooth, Zigbee. The data may comprise heater cassette status information.

Preferably, the data is used to operate a user interface for controlling the heater cassette.

Preferably, the heater cassette further comprises a heat sensor and the data comprises data from the heat sensor. The heat data may be used to regulate heat output of the heater cassette.

Preferably, the heater cassette further comprises a sensor, such as a pressure sensor, for detecting the absence of the food bowl. The absence data may be used to power down a heating element of the heater cassette and/or a motor of the base unit.

Preferably, the heater cassette is adapted to relay data between base unit and bowl.

The data destination may be determined in dependence on metadata contained within the data. The metadata may comprise the header of a data packet.

Preferably, the heater cassette is adapted to connect to the internet. The connection to the internet may be made via the base unit. The heater cassette may be adapted to provide internet connectivity.

According to another aspect of the invention there is provided a heater cassette comprising the following layers in order: a substrate: an insulation layer; a layer of resistive paste; a contact layer; and a connective layer, preferably an additional protective layer.

According to another aspect of the invention there is provided a food processor incorporating the heater cassette as herein described. Preferably, the food processor comprises a base unit and a food bowl, wherein the heater cassette is located between the base unit and food bowl. The heater cassette may be adapted to conform to the shape of either the base unit or the food bowl, preferably adapted when in use to heat food being processed by the food processor.

According to another aspect of the invention there is provided a method of manufacturing a heating cassette for a food processor, the method comprising applying to a substrate in order: an insulation layer; a layer of resistive paste; a contact layer; and a connective layer; wherein after application of each layer the resulting work-piece is dried and then heated to a temperature sufficient to ensure fixation. The method may further comprise applying an additional protective layer.

According to a further aspect of the invention there are provided a method of manufacturing and a method of using a heater cassette as herein described.

Further features of the invention are characterised by the dependent claims.

Aspects of the invention may provide one, some or all of the following, in any appropriate combination.

The invention extends to methods and/or apparatus substantially as herein described with reference to the accompanying drawings.

Any feature in one aspect of the invention may be applied to other aspects of the invention, in any appropriate combination. In particular, method aspects may be applied apparatus aspects, and vice versa.

Equally, the invention may comprise any feature as described, whether singly or in any appropriate combination.

The invention will now be described, purely by way of example, with reference to the accompanying drawings, in which:
Figure 1 shows an exploded view of a food processor incorporating a heater cassette;
Figure 2 shows the heater cassette in further detail;
Figure 3 is an exploded perspective view of a food processor and a heater cassette according to another embodiment;
Figure 4 is a perspective view of the cassette of Figure 3;
Figure 5 is a cross sectional view of the cassette of Figure 3;
Figures 6a and 6b show the interlock mechanism for the heater cassette in more detail;
Figure 7 is an exploded perspective view of a food processor and a heater cassette according to a further embodiment;
Figures 8 and 9 show the upper surface of the heater cassette and lower surface of the bowl of the food processor of Figure 7 in more detail;
Figure 10 is a side view showing the internal components of the heater cassette of Figure 7;
Figure 11 is an exploded perspective view of a food processor and heater cassette according to a still further embodiment;
Figure 12 is a perspective view of the heater cassette of Figure 11, showing the internal components; and
Figures 13a to 13d show various cooking accessories for use with the processor.

### Overview

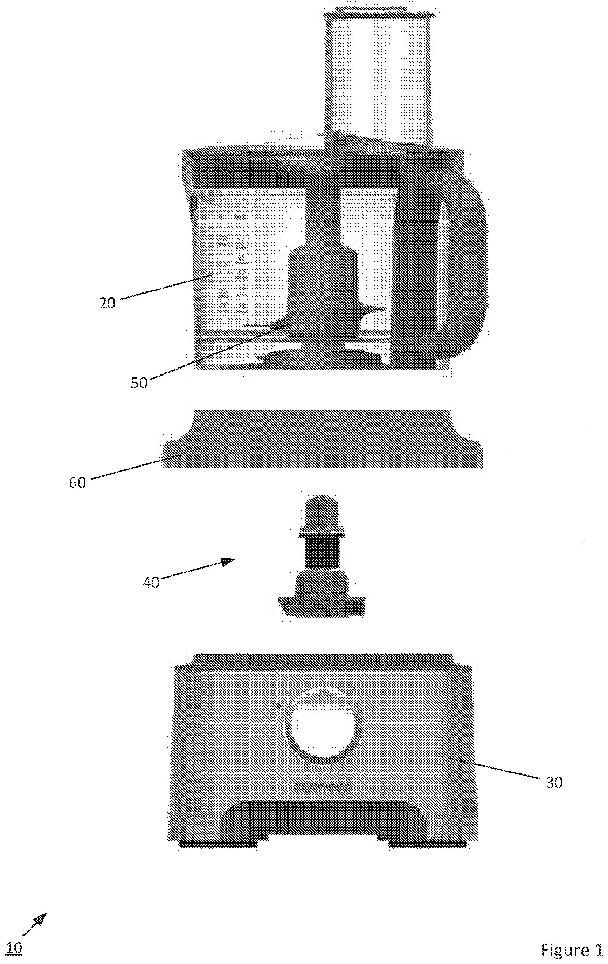

Figure 1 shows an exploded view of a food processor incorporating a heating cassette.

Food processor 10 comprises a food processing container or bowl 20 which sits atop a base unit 30. A motor in the base unit 30 powers a drive adaptor 40 which in turn rotates rotary blades 50 for comminution of food in the bowl 20.

Heater cassette 60 is an intermediate heater element introduced between the bowl 20 and the base unit 30 and designed as a removable attachment to transform existing non-heating food processing appliances in to heating food processing appliances.

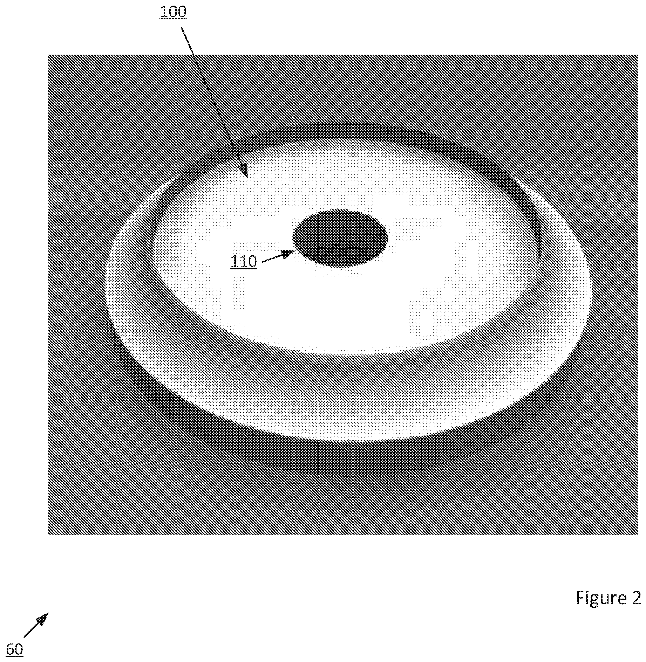

Figure 2 shows the heater cassette in further detail.

In this embodiment, heater cassette 60 is substantially flat and disc shaped.

The upper surface of the heating cassette 60 comprises a sunken recess 100 for receiving a food processor bowl 20.

The bottom surface of the heater cassette 60 is detachably engaged with the base unit 30 of the food processor.

The heater cassette 60 has suitable means to attach itself to both motor and bowl unit. The means for attaching the food processor bowl 20, such as a locking mechanism, are also provided to hold the food processor bowl in position when in use.

Heating cassette 60 has a hole or central opening 110 to permit a motor drive shaft of a food processor base unit 30 to pass through it and couple with an in-bowl drive system of a food processor bowl 20.

Mating of the drive shaft with the in-bowl drive system is achieved by placing an adaptor 40 onto the motor drive shaft, thus extending it across the thickness of the heater cassette 60, through the central opening 110, to couple with the in-bowl drive system. Adaptor 40 can be integral to the heater cassette 60, or provided separately, and is preferably made of a heat-resistant and heat insulating material to avoid heat-transmission into the motor drive unit.

A safety handle may be provided for easy and safe attachment and detachment of the heater cassette 60 from the food processor base unit 30. Such a safety handle is manufactured from a thermally insulating material to prevent a user from burning their hands when removing the heater cassette from the food processor base after use.

in some embodiments, the heater cassette 60 can also operate as a standalone heating plate powered either from the food processing unit or independent of the food processing unit, which will enable consumers to move it to different places (from kitchen to living room, for example).

### Heating

In this embodiment, the heating technology for is a Thick Film heating element screenprinted onto an insulating metallic / non-metallic substrate (e.g., ceramic, stainless steel, aluminium, alumina, etc). Thick Film is preferred because of its relative thinness (typically 1-2mm) and because it can be made water-proof and machine-washable without requiring the application of additional protective coatings.

An additional protective layer is also applied to protect against scratches and other damage.

Other heating technologies such as induction, resistive wire, heating bulb (radiative), etc., can also be used.

### Power

Power to the heating cassette 60 is provided via known wireless power transmission methods, which include both radiative (far-field, e.g. microwave power transmission) and non-radiative (near field, e.g. inductive powering) power transmission. The wireless power unit can be accommodated inside the food processor base unit or outside the food processing system, such as wireless power transmission hub.

Alternatively or in addition to the above, the heater cassette can be powered by a rechargeable internal battery, by a supercapacitor or the heating cassette 60 can receive power from the base via a plug-and-socket powering arrangement.

The heater cassette 60 is additionally equipped with a power or powering port, which can be used to power the heater cassette 60 when being operated independent of the motor base unit 30. This powering port is designed to receive power from the mains (of varying voltages - 120/240V), and by USB (by connecting for example to computers, laptops, displays, smart devices and the like).

An on/off switch mechanism, such as a mechanical switch, is activated when the heater cassette 60 is mounted on to the food processor base unit 30, and deactivated when the heater cassette is detached from the food processor base unit 30.

Heater cassette 60 includes suitable electrical power transmission means to ensure that electrically powered elements in the food processing bowl 20 continue to receive power from the base motor unit 30.

### Control & Communication

The heater cassette 60 includes a control circuit including a memory, processor, and input and output means for receiving and transmitting data to electronic components in the food processing bowl 20 and in the base motor unit 30.

Communication between motor base unit 30 and heater cassette 60, and between the food processing bowl 20 and the heater cassette 60, can be achieved by both by wired and contact-less methods, for example NFC, WiFi or Bluetooth, Zigbee.

An RFID identification tag enables the heating cassette 60 to be automatically recognised by the base unit 30 when equipped with an RFID detector.

The heater cassette 60 further includes a heat sensor which communicates with the control circuit so that the processor of the control circuit can automatically regulate a heat-output of the cassette heater based on the data received from the heat sensor.

The heater cassette 60 is capable of producing varying temperature output, which can be controlled either through the machine / appliances; or wirelessly through an app (communicated by Wi-Fi, Bluetooth, Zigbee, and any other know wireless communication method); or controlled on computer / smart device through a physical communication port such as USB, HDMI etc.

The heater cassette 60 also includes sensors for detecting the presence or absence of the processing bowl 20 such as, for example, pressure switches. The feedback from these sensing means can be used by either the motor base unit 30 or the heater cassette 60 to power down heating elements and/or the motor of the motor base unit 30. This may avoid potential harm to the user caused by exposure to the heating element of the heater cassette 60 or the drive outlet of the motor base unit 30.

In some embodiments, the motor base unit 30 includes a user interface. Heater cassette 60 transmits information stored in the memory of its control circuit including user-interface information for automatically adapting the user interface of the motor base unit so that it can be used to control the heater cassette 60. Heater cassette 60 may also transmit data received by the heat sensor to the motor base unit 30 to be displayed to the user.

In some embodiments, the heater cassette 60 is connected to the internet, either directly or via the motor base unit 30.

This internet connection can be used to update the heater cassette 60 software and/or firmware to work with new models of food processor 10.

Where the motor base unit 30 provides the internet connection, heater cassette 60 transmits instructions to the motor base unit 30 to access an external server, download data and forward it to the heater cassette 60 so that information stored in the memory of the heater cassette control circuit can be updated to the latest version.

Where the motor base unit 30 lacks an internet communication, the heater cassette 60 may provide this (using the above-mentioned communications port or wireless communications means accessing the internet via a local router), enabling the updating of motor base unit software, and internet communication by the motor base 30 unit by forwarding data to and from the motor base unit 30.

Heater cassette data such as temperature data may also transmitted to the external server.

Moreover, where a wired data-transmission link exists between the food processing bowl 20 and the base motor unit 30, for example when the two are attached to each other without the heater cassette 60, the heater cassette 60 when attached can maintain this link by forwarding data from the motor base unit 30 to the food processing bowl 20 and from the food processing bowl 20 to the motor base unit 30 based on metadata contained within the data. For example, this forwarding may be achieved by the cassette based on a packet-header of a data-packet that it receives.

### Fabrication

The screen printing of the thick film heater is performed by first applying an insulation layer to a substrate, then applying a layer of resistive paste on top of the insulation layer, then contact and connective layers. After each layer is applied, the resulting work-piece is dried and then heated to a temperature sufficient to ensure fixation. An additional protective layer may be applied to protect against scratches and other damage.

Food processing bowl 20 is made of a suitable heat-resistant material, such as heat-resistant glass or stainless steel. Food processing bowl 20 can also be a "bottomless bowl", ie. one consisting of an enclosure with sides and a top-cover but no bottom in which an in-bowl drive system is suspended from either the top or the sides.

In the case where the food processing bowl 20 includes non-heat-resistant elements, the corresponding surface of the heater cassette 60 that is near to the non-heat-resistant elements (or near to heat conductive elements that will transmit heat to non-heat-resistant elements) when the heater cassette 60 is attached to the food processing bowl 20 does not have a thick film (or other heating elements) applied to it.

For example, where one or more of the rotary blades 50 is formed of a heat conductive substance (e.g., steel) and approaches close to the heater cassette 60 during rotation, and where the drive adaptor 40 is formed of a non-heat-resistant material (e.g., plastic) and the rotary blades 50 conduct heat to the drive adaptor 40, no heating element will be formed near (e.g., within 2cm of) the path of the rotary blades 50 or the drive adaptor 40.

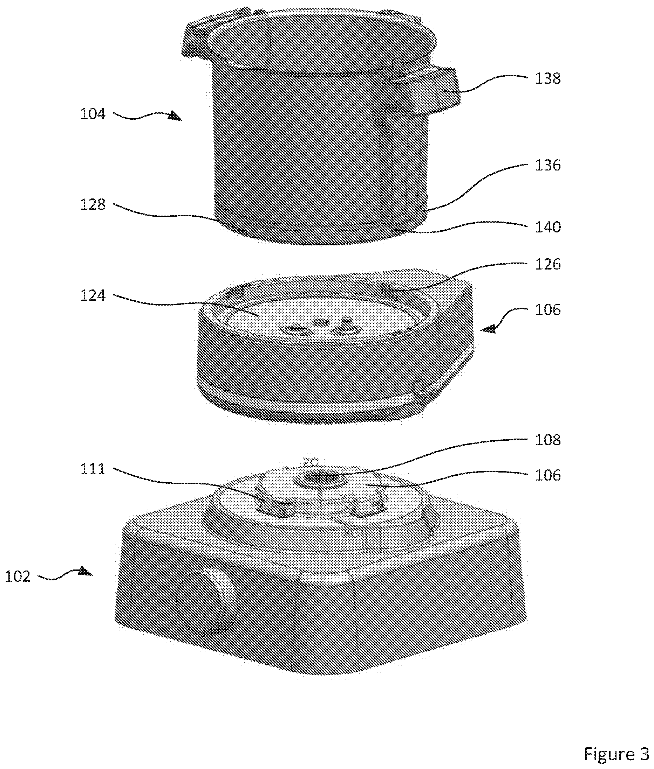

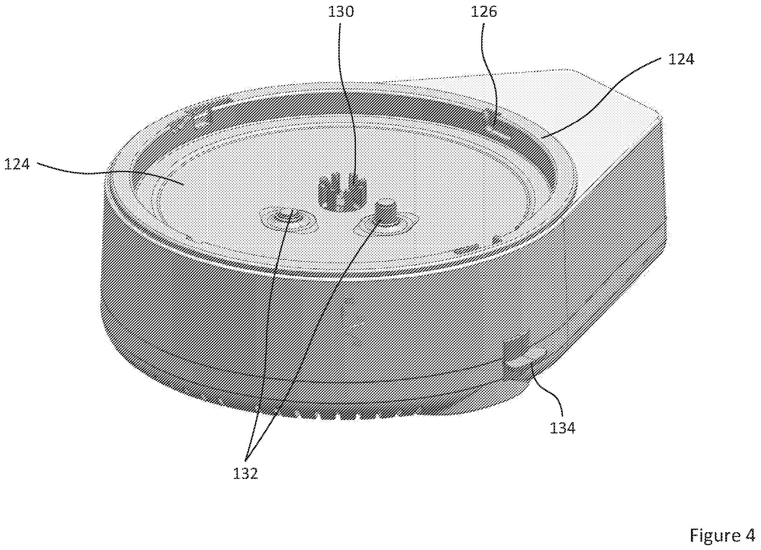

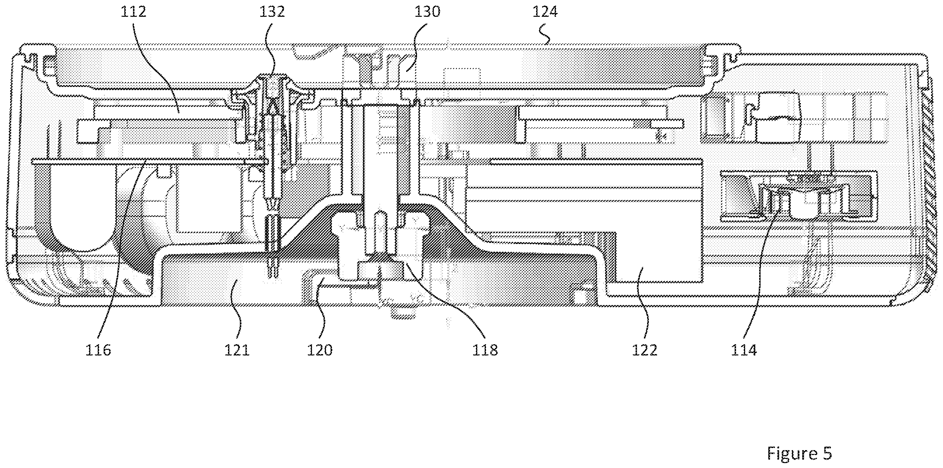

Referring now to Figures 3 to 6, in another embodiment, the food processor comprises a base 102 and a bowl 104. The base 102 has a plurality of bayonet mounts 111 arranged around a substantially circular protrusion 109 of the base for connecting to the underside of the bowl 104 in operation of the food processor. The base also includes a drive outlet comprising a shaped female coupling 108 in the centre of the protrusion 109. A heater cassette 106 is arranged to be optionally connectable to the base 102 between the base and the bowl 104, via an interlock arrangement including corresponding bayonet fittings 120 in the sides of a corresponding substantially circular recess 121 in the lower surface of the cassette 106.

The cassette is arranged to couple to a drive outlet 108 of the base 102, via a drive shaft and bearing assembly 118, which may be fixed in the cassette or may be removable, and which projects into the recess 121 in the lower surface of the cassette. The cassette 106 contains a heater element such as an induction heating coil assembly 112, and associated control circuitry, for example control electronics and cooling fans 114 and a PCBA 116. The cassette may also include a heat sink 122. The cassette is also provided with a power connection such as a mains power cord to powering the heater element. However, alternatively the cassette may receive power from the processor base unit 102 via pins and a corresponding plug connection.

The upper surface of the heater cassette comprises a shallow depression 124 shaped to receive the bowl 104, and comprising further bayonet fittings 126 around the edge for engaging with bayonet pins 128 around the base of the bowl 104. The depression 124 may comprise a bowl mount formed of high temperature plastics material. In the centre, a drive coupling 130 is provided, connected to the drive shaft assembly 118, for coupling to the underside of the bowl 104 to drive a food processing tool within the bowl. The mount 124 also provides bowl temperature sensors 132 for contacting the underside of the bowl in use. The cassette is also provided with a manually operable attachment and release latch 134.

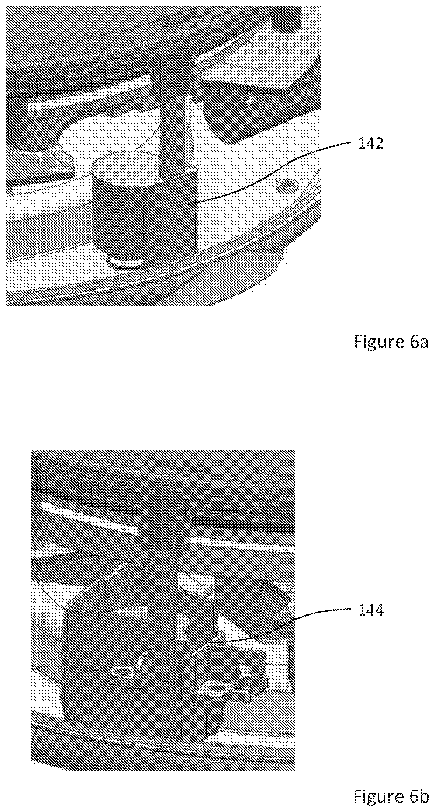

The cooking bowl 104 has an induction heater compatible base 136, and is arranged to be sealed with a lid (not shown) having an integrated seal. A handle 138 of the bowl includes a channel extending down the side of the bowl which includes an interlock member 140 projecting from the end of the channel for indicating when the lid is correctly fitted and sealed to the bowl. The member 140 normally cooperates with a corresponding arrangement on the base 102 to indicate a safe condition and allow operation of the food processor. As can be seen from Figures 6a and 6b, the heater cassette has either a mechanical or electrical interlock mechanism which is operable by the interlock member 140 to take the place of the member 140 to cooperate with the corresponding arrangement on the base 102. These comprise either a moveable member 142 which is spring loaded, and can be depressed by the bowl interlock member 140, or an electrical interlock 144 which is operable by the member 140 to send a signal, such as an infrared link, to the food processor base indicating that the lid and seal are in place.

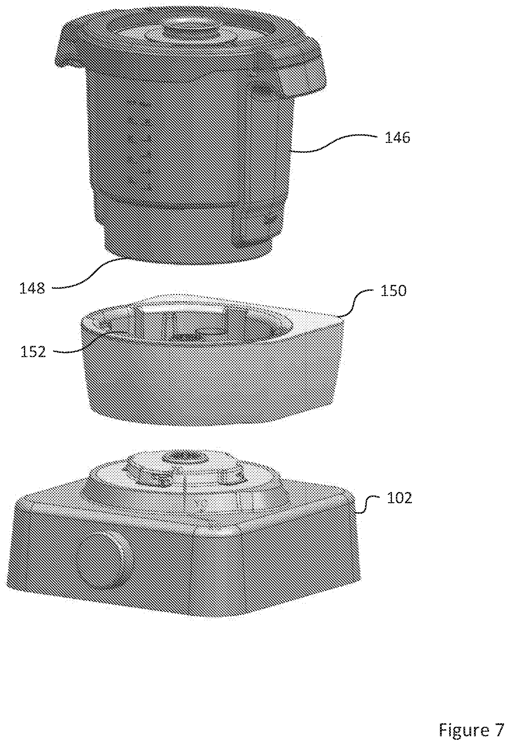

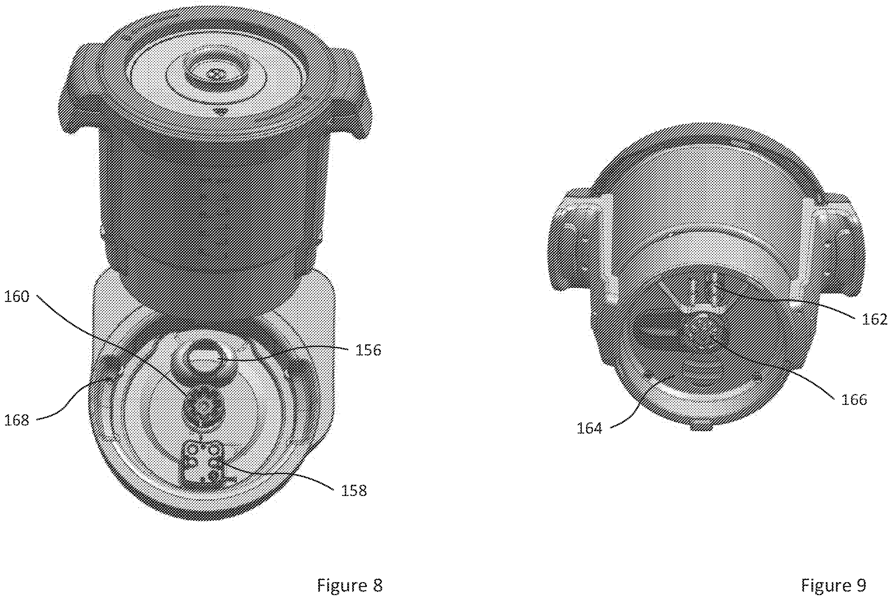

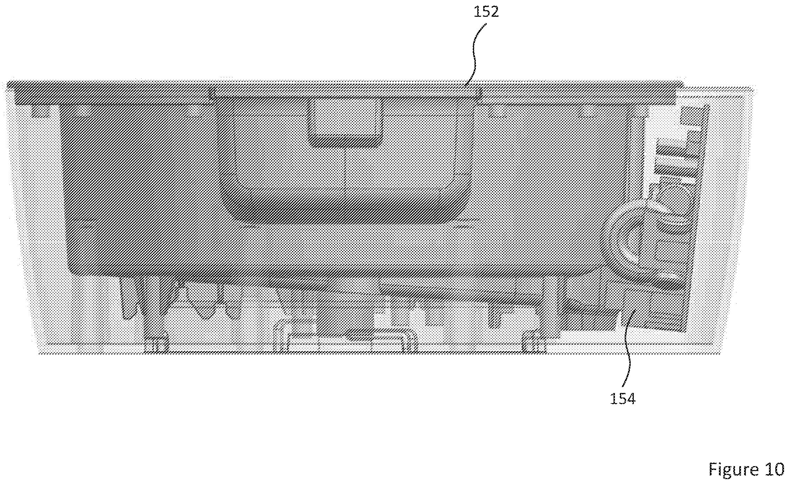

Referring now to Figures 7 to 10, in an alternative arrangement, the food processor comprises a bowl 146 similar to the bowl shown in Figure 3, but additionally including a heating element, such as a resistive or thick film heating element, on the base 148 of the bowl.

in this case, the heater cassette 150 is arranged to connect to the food processor base 102 in the same way. The heater cassette 150 has a deeper depression 152 for receiving the bowl 146, which may comprise a mount formed of high temperature plastics material. The cassette contains control electronics for the heater, such as a PCBA 154, together with other components such as transformers, rectifiers etc for powering and/or controlling the heater element. It will be appreciated that these items are likely to be bulky, and thus it is advantageous to house them in the heater cassette even if the element itself is part of the bowl. The cassette also comprises a temperature sensor 156 and a power and temperature sensor connector 158 within the mount, as well as a drive connector 160 as before. The bowl 148 has corresponding power connector and temperature sensor connecting pins 162 projecting from the lower surface 164 thereof, in addition to a drive connector 166.

The cassette 150 includes a lid and seal interlock mechanism 168 for cooperation with the base 102 as described above to indicate a safe condition and allow operation of the food processor.

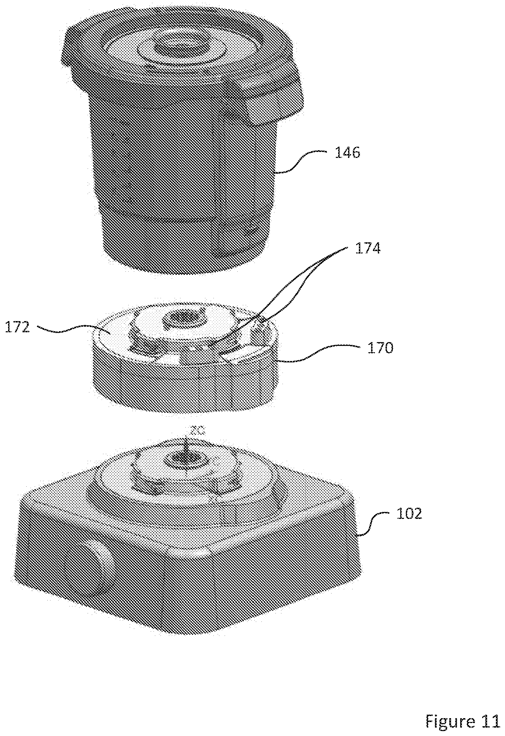

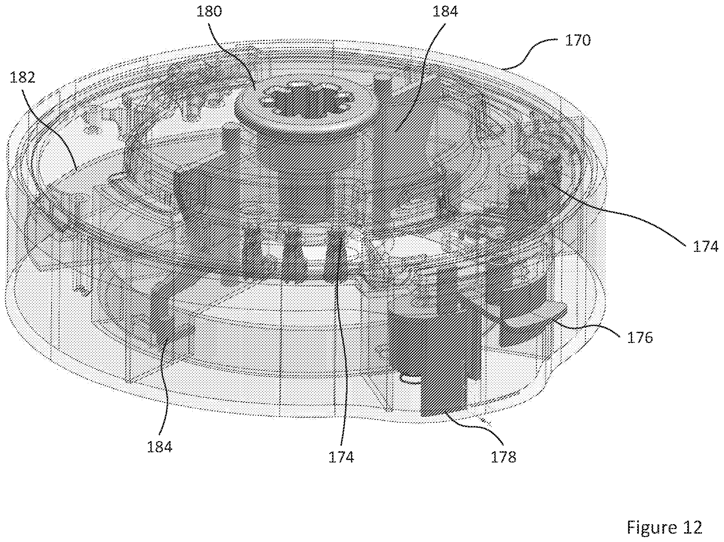

As an alternative, and as shown in Figures 11 and 12, the heater cassette 170 may have an upper surface 172 which substantially replicates the configuration of the upper surface of the food processor base 102. Thus once the cassette 170 is fitted to the base 102, other food processor attachments which are normally attachable to the base 102 may be attached to the cassette instead. In addition, similarly to the cassette shown in Figure 7, the cassette 170 includes temperature sensors and heating element power connectors 174 for the bowl 148.

As before, the cassette has an attachment and release latch 176, and a lid and seal interlock mechanism 178, a bowl drive coupling 180 and a control electronics PCBA 182. Additionally, the cassette 170 includes a pair of opposed bayonet fittings 184 for connecting directly to the bayonet mounts on the base 102 via a torsion sprung paddle.

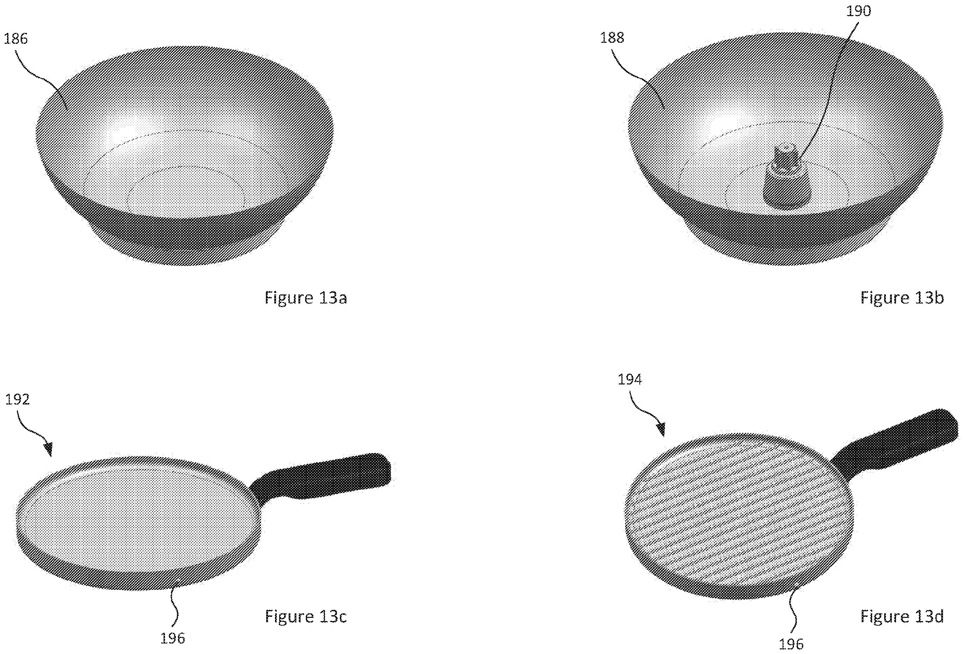

Referring now to Figures 13a to d, various alternative bowls are shown which are suitable for use with the heater cassette 106 of Figure 3, which includes a heating element. The heater cassette enables the processor to be used either for heating with a further food processing tool such as a stir tool, or simply for heating of a cooking surface. Figures 13a and 13b each show a wok 186, 188 each with an induction compatible base, one of which has a drive shaft 190 for attaching a processing tool. Figures 13c and 13d show a hot plate 192 and a griddle pan 194 respectively, also with induction compatible bases, and each having bayonet pins 196 for attachment to corresponding bayonet fittings on the heater cassette.

It will be understood that references to the 'bowl' of the food processor are intended to include any suitable vessel or cooking accessory which can be used with the food processor and heater cassette.

The heating element can be applied to the heater cassette 60 in any suitable pattern, including concentric circles centred on the central opening 110, a spiral, a star-shape, or in lines radiating from the central opening 110.

It will be understood that the invention has been described above purely by way of example, and modifications of detail can be made within the scope of the invention.

## Claims

1. A non-heating food processor (10) comprising a base unit and a food bowl, and a heater cassette (60) for adapting the non-heating food processor for heating, the heater cassette being adapted to be removably introduced between the base unit (30) and the food bowl of the food processor so as to transform the non-heating food processor into a heating food processor.

2. A food processor according to claim 1, wherein the first or upper surface (100) of the heater cassette is adapted to conform to the shape of the food bowl, and/or.
wherein the second or lower surface of the heater cassette is adapted to conform to the shape of the base unit of the food processor.

3. A food processor according to claim 1 or 2, wherein the heater cassette further comprises a bowl locking mechanism to hold the food bowl in place on the heater cassette and/or
wherein the heater cassette further comprises a base unit locking mechanism for holding the heater cassette in place on the base unit, preferably
wherein the bowl and/or base unit locking mechanisms operate an on/off switch on the heater cassette.

4. A food processor according to any preceding claim, further comprising a handle to facilitate attachment and detachment of the heater cassette from the base unit, and/or
being adapted to operate as a standalone heating device.

5. A food processor according to any preceding claim, wherein the heater cassette further comprises a hole (110) extending through from upper to lower surface of the heater cassette adapted to allow a drive shaft (118) driven from the base unit to drive elements in the food bowl, preferably
wherein the heater cassette further comprises an adaptor (40) to extend the reach of the drive shaft through the heater cassette, preferably through the hole, optionally
wherein the adaptor is integral to the heater cassette, and/or
wherein the adaptor is manufactured from a heat resistant and/or heat insulating material.

6. A food processor according to any preceding claim, comprising a heating element (112) for supplying heat to the food bowl, preferably comprising a thick film, inductive, resistive or radiative heating element, preferably thermally isolated from non-heat-resistant elements of the food processor and/or forming a pattern centred on the hole.

7. A food processor according to any preceding claim, wherein the heater cassette is powered wirelessly, preferably
wherein wireless power is provided by one or more of: radiative, far field or non-radiative, near field power transmission, and/or
wherein wireless power is provided by a power unit located in the base unit, a wireless power transmission hub, and induction.

8. A food processor according to any of claims 1 to 6, wherein the heater cassette is powered by means of a battery or a supercapacitor and/or
wherein the heater cassette further comprises a power port, preferably
wherein power to the heater cassette is provided via the power port, and/or
wherein power is provided from a mains supply or from a USB connection.

9. A food processore according to any preceding claim, wherein the heater cassette further comprises an RFID tag, preferably
wherein the RFID tag is used to identify the heater cassette to one and/or other of the food processor base unit and food processor bowl.

10. A food processor according to any preceding claim, wherein the heater cassette further comprises control circuitry (114, 116) for controlling operation of the heater cassette, and/or
wherein the heater cassette further comprises communication circuitry for receiving and/or transmitting data to electronic components in the bowl and/or base unit or to a remote device, preferably
wherein the remote device comprises a computer running an app, and preferably
wherein the communication is via one or more of: wired, contactless, NFC, WiFi, Bluetooth, Zigbee, and/or
wherein the data comprises heater cassette status information, and/or
wherein the data is used to operate a user interface for controlling the heater cassette.

11. A food processor according to claim 10, wherein the heater cassette further comprises a heat sensor and the data comprises data from the heat sensor, preferably
wherein the heat data is used to regulate heat output of the heater cassette, and/or
wherein the heater cassette further comprises a sensor, such as a pressure sensor, for detecting the absence of the food bowl, preferably wherein the absence data is used to power down a heating element of the heater cassette and/or a motor of title base unit.

12. A food processor according to claims 10 or 11, wherein the heater cassette is adapted to relay data between base unit and bowl, preferably
wherein the data destination is determined in dependence on metadata contained within the data, preferably
wherein the metadata comprises ti1e header of a data packet.

13. A food processor according to any of claims 10, 11 or 12, wherein the heater cassette is adapted to connect to the internet, preferably
wherein the connection to the internet is made via the base unit, and/or
wherein the heater cassette is adapted to provide internet connectivity.

14. A food processor of any of claims 1 to 13,
wherein the heater cassette is adapted when in use to heat food being processed by the food processor.

15. A food processor according to claim 14, in which the bowl comprises a heater element, and the heater cassette is arranged to control the heater element.

## Patentansprüche

1. Eine nicht heizende Küchenmaschine (10), die eine Basiseinheit und eine Rührschüssel umfasst, und eine Heizkassette (60) zum Anpassen der nicht heizenden Küchenmaschine zum Heizen, wobei die Heizkassette angepasst ist, um zwischen die Basiseinheit (30) und die Rührschüssel der Küchenmaschine entfernbar eingeführt zu werden, um die nicht heizende Küchenmaschine in eine heizende Küchenmaschine zu transformieren.

2. Eine Küchenmaschine gemäß Anspruch 1, wobei die erste oder obere Oberfläche (100) der Heizkassette angepasst ist, um der Form der Rührschüssel zu entsprechen, und/oder
wobei die zweite oder untere Oberfläche der Heizkassette angepasst ist, um der Form der Basiseinheit der Küchenmaschine zu entsprechen.

3. Eine Küchenmaschine gemäß Anspruch 1 oder 2, wobei die Heizkassette einen Schüsselverriegelungsmechanismus umfasst, um die Rührschüssel auf der Heizkassette festzuhalten, und/oder
wobei die Heizkassette ferner einen Basiseinheitsverriegelungsmechanismus zum Festhalten der Heizkassette auf der Basiseinheit umfasst,
wobei bevorzugt der Schüsselverriegelungsmechanismus und/oder Basiseinheitsverriegelungsmechanismus einen Ein-/Aus-Schalter auf der Heizkassette betätigen.

4. Eine Küchenmaschine gemäß einem vorhergehenden Anspruch, die ferner einen Griff umfasst, um eine Ankopplung und Abkopplung der Heizkassette von der Basiseinheit zu ermöglichen, und/oder
angepasst ist, um als selbstständige Heizvorrichtung zu arbeiten.

5. Eine Küchenmaschine gemäß einem vorhergehenden Anspruch, wobei die Heizkassette ferner ein Loch (110) umfasst, das sich von oberer bis unterer Oberfläche der Heizkassette hindurch erstreckt, das angepasst ist, um einer Antriebswelle (118), die von der Basiseinheit angetrieben wird, zu erlauben, Antriebselemente in der Rührschüssel anzutreiben,
wobei bevorzugt die Heizkassette ferner einen Adapter (40) umfasst, um die Reichweite der Antriebswelle durch die Heizkassette, bevorzugt durch das Loch, zu erweitern,
wobei optional der Adapter mit der Heizkassette integral ist, und/oder
wobei der Adapter aus einem hitzeresistenten und/oder hitzeisolierenden Material gefertigt ist.

6. Eine Küchenmaschine gemäß einem vorhergehenden Anspruch, die ein Heizelement (112) zum Speisen der Rührschüssel mit Hitze umfasst, das bevorzugt ein Dickschicht-, induktives-, resistives- oder strahlendes Heizelement umfasst, bevorzugt von Nicht-Hitze-Widerstandselementen der Küchenmaschine thermisch isoliert und/oder auf dem Loch ein zentriertes Muster bildend.

7. Eine Küchenmaschine gemäß einem vorhergehenden Anspruch, wobei die Heizkassette drahtlos mit Strom versorgt wird,
wobei bevorzugt drahtloser Strom durch eines oder mehrere von Folgendem bereitgestellt wird: strahlende Fernfeld- oder nichtstrahlende Nahfeldstromübertragung, und/oder
wobei drahtloser Strom durch eine Stromeinheit, die in der Basiseinheit angeordnet ist, eine drahtlose Stromübertragungsnabe und Induktion bereitgestellt wird.

8. Eine Küchenmaschine gemäß einem der Ansprüche 1 bis 6, wobei die Heizkassette mittels einer Batterie oder eines Superkondensators mit Strom versorgt wird, und/oder
wobei die Heizkassette ferner einen Stromanschluss umfasst,
wobei bevorzugt Strom für die Heizkassette über den Stromanschluss bereitgestellt wird, und/oder
wobei Strom von einer Netzspeisung oder von einer USB-Verbindung bereitgestellt wird.

9. Eine Küchenmaschine gemäß einem vorhergehenden Anspruch, wobei die Heizkassette ferner einen RFID-Tag umfasst,
wobei bevorzugt der RFID-Tag verwendet wird, um die Heizkassette für eine und/oder die andere der Küchenmaschinenbasiseinheit und Küchenmaschinenschüssel zu identifizieren.

10. Eine Küchenmaschine gemäß einem vorhergehenden Anspruch, wobei die Heizkassette ferner eine Steuerungsschaltungsanordnung (114, 116) zum Steuern des Betriebs der Heizkassette umfasst, und/oder
wobei die Heizkassette ferner eine Kommunikationsschaltungsanordnung zum Empfangen und/oder Übertragen von Daten an Elektronikkomponenten in der Schüssel und/oder Basiseinheit oder an eine entfernte Vorrichtung umfasst,
wobei bevorzugt die entfernte Vorrichtung einen Computer umfasst, auf dem eine App läuft, und
wobei bevorzugt die Kommunikation über eines oder mehrere von Folgendem erfolgt: drahtgebunden, kontaktlos, NFC, WiFi, Bluetooth, Zigbee, und/oder
wobei die Daten Heizkassettenstatusinformationen umfassen, und/oder
wobei die Daten verwendet werden, um eine Benutzerschnittstelle zum Steuern der Heizkassette zu betreiben.

11. Eine Küchenmaschine gemäß Anspruch 10, wobei die Heizkassette ferner einen Hitzesensor umfasst und die Daten Daten von dem Hitzesensor umfassen,
wobei bevorzugt die Hitzedaten verwendet werden, um den Hitzeausgang der Heizkassette zu regulieren, und/oder
wobei die Heizkassette ferner einen Sensor umfasst wie etwa einen Drucksensor, zum Detektieren des Abwesendsein der Rührschüssel, wobei bevorzugt die Abwesendseindaten verwendet werden, um ein Heizelement der Heizkassette und/oder einen Motor der Basiseinheit auszuschalten.

12. Eine Küchenmaschine gemäß Anspruch 10 oder 11, wobei die Heizkassette angepasst ist, Daten zwischen der Basiseinheit und Schüssel zu übermitteln,
wobei bevorzugt das Datenziel in Abhängigkeit von innerhalb der Daten enthaltenen Metadaten bestimmt wird,
wobei bevorzugt die Metadaten den Header eines Datenpakets umfassen.

13. Eine Küchenmaschine gemäß einem der Ansprüche 10, 11 oder 12, wobei die Heizkassette angepasst ist, um mit dem Internet verbunden zu werden,
wobei bevorzugt die Verbindung mit dem Internet über die Basiseinheit hergestellt wird, und/oder
wobei die Heizkassette angepasst ist, um Internetkonnektivität bereitzustellen.

14. Eine Küchenmaschine gemäß einem der Ansprüche 1 bis 13,
wobei die Heizkassette angepasst ist, um bei Gebrauch Lebensmittel, die durch die Küchenmaschine verarbeitet werden, zu erhitzen.

15. Eine Küchenmaschine gemäß Anspruch 14, bei der die Schüssel ein Heizelement umfasst und die Heizkassette eingerichtet ist, um das Heizelement zu steuern.

## Revendications

1. Robot culinaire non chauffant (10) comportant une unité de base et un bol pour aliments, et une cassette à corps de chauffe (60) servant à adapter le robot culinaire non chauffant à des fins de chauffage, la cassette à corps de chauffe étant adaptée pour être introduite de manière amovible entre l'unité de base (30) et le bol pour aliments du robot culinaire de manière à transformer le robot culinaire non chauffant en un robot culinaire chauffant.

2. Robot culinaire selon la revendication 1, dans lequel la première surface ou surface supérieure (100) de la cassette à corps de chauffe est adaptée pour se conformer à la forme du bol pour aliments, et/ou,
dans lequel la deuxième surface ou surface inférieure de la cassette à corps de chauffe est adaptée pour se conformer à la forme de l'unité de base du robot culinaire.

3. Robot culinaire selon la revendication 1 ou la revendication 2, dans lequel la cassette à corps de chauffe comporte par ailleurs un mécanisme de verrouillage de bol servant à retenir le bol pour aliments en place sur la cassette à corps de chauffe et/ou
dans lequel la cassette à corps de chauffe comporte par ailleurs un mécanisme de verrouillage d'unité de base servant à retenir la cassette à corps de chauffe en place sur l'unité de base, de préférence
dans lequel les mécanismes de verrouillage de bol et/ou d'unité de base font fonctionner un interrupteur marche/arrêt sur la cassette à corps de chauffe.

4. Robot culinaire selon l'une quelconque des revendications précédentes, comportant par ailleurs une poignée servant à faciliter la mise en place et la séparation de la cassette à corps de chauffe par rapport à l'unité de base, et/ou
étant adaptée pour fonctionner sous la forme d'un dispositif de chauffage autonome.

5. Robot culinaire selon l'une quelconque des revendications précédentes, dans lequel la cassette à corps de chauffe comporte par ailleurs un trou (110) s'étendant de manière traversante depuis la surface supérieure jusqu'à la surface inférieure de la cassette à corps de chauffe, le trou étant adapté pour permettre à un arbre d'entraînement (118) entraîné depuis l'unité de base d'entraîner des éléments dans le bol pour aliments, de préférence
dans lequel la cassette à corps de chauffe comporte par ailleurs un adaptateur (40) pour étendre la portée de l'arbre d'entraînement au travers de la cassette à corps de chauffe, de préférence au travers du trou, éventuellement
dans lequel l'adaptateur fait partie intégrante de la cassette à corps de chauffe, et/ou
dans lequel l'adaptateur est fabriqué à partir d'un matériau résistant à la chaleur et/ou calorifuge.

6. Robot culinaire selon l'une quelconque des revendications précédentes, comportant un élément chauffant (112) servant à fournir de la chaleur au niveau du bol pour aliments, comportant de préférence un élément chauffant par induction, par résistance ou par radiation de type à couche épaisse, de préférence thermiquement isolé des éléments non résistants à la chaleur du robot culinaire et/ou formant un motif centré sur le trou.

7. Robot culinaire selon l'une quelconque des revendications précédentes, dans lequel la cassette à corps de chauffe est alimentée sans fil, de préférence
dans lequel l'alimentation sans fil est fournie par une ou plusieurs parmi : une transmission de puissance radiative, de champ lointain ou non radiative, de champ proche, et/ou
dans lequel l'alimentation sans fil est fournie par une unité de puissance située dans l'unité de base, un moyeu de transmission de puissance sans fil, et par induction.

8. Robot culinaire selon l'une quelconque des revendications 1 à 6, dans lequel la cassette à corps de chauffe est alimentée au moyen d'une batterie ou d'un supercondensateur et/ou
dans lequel la cassette à corps de chauffe comporte par ailleurs un port de puissance, de préférence
dans lequel la puissance à la cassette à corps de chauffe est fournie par le biais du port de puissance, et/ou
dans lequel la puissance est fournie en provenance d'une alimentation par le secteur ou en provenance d'une connexion USB.

9. Robot culinaire selon l'une quelconque des revendications précédentes, dans lequel la cassette à corps de chauffe comporte par ailleurs une étiquette RFID, de préférence
dans lequel l'étiquette RFID est utilisée pour identifier la cassette à corps de chauffe pour l'une et/ou l'autre parmi l'unité de base du robot culinaire et le bol du robot culinaire.

10. Robot culinaire selon l'une quelconque des revendications précédentes, dans lequel la cassette à corps de chauffe comporte par ailleurs un circuit de commande (114, 116) servant à des fins de commande du fonctionnement de la cassette à corps de chauffe, et/ou
dans lequel la cassette à corps de chauffe comporte par ailleurs un circuit de communication servant à recevoir et/ou à transmettre des données à des composants électroniques dans le bol et/ou l'unité de base ou à un dispositif à distance, de préférence
dans lequel le dispositif à distance comporte un ordinateur exécutant une application, et de préférence
dans lequel la communication se fait par le biais de l'un ou de plusieurs parmi : par fil, sans contact, en champ proche, WiFi, Bluetooth, Zigbee, et/ou
dans lequel les données comportent des informations se rapportant au statut de la cassette à corps de chauffe, et/ou
dans lequel les données sont utilisées pour faire fonctionner une interface utilisateur à des fins de commande de la cassette à corps de chauffe.

11. Robot culinaire selon la revendication 10, dans lequel la cassette à corps de chauffe comporte par ailleurs un capteur de chaleur et les données comportent des données en provenance du capteur de chaleur, de préférence
dans lequel les données de chaleur sont utilisées pour réguler la sortie de chaleur de la cassette à corps de chauffe, et/ou
dans lequel la cassette à corps de chauffe comporte par ailleurs un capteur, tel qu'un capteur de pression, servant à détecter l'absence du bol pour aliments, de préférence dans lequel les données d'absence sont utilisées à des fins de mise hors tension d'un élément chauffant de la cassette à corps de chauffe et/ou un moteur de l'unité de base.

12. Robot culinaire selon la revendications 10 ou la revendication 11, dans lequel la cassette à corps de chauffe est adaptée pour relayer les données entre l'unité de base et le bol, de préférence
dans lequel la destination des données est déterminée en fonction de métadonnées contenues dans les données, de préférence
dans lequel les métadonnées comportent l'en-tête d'un paquet de données.

13. Robot culinaire selon l'une quelconque des revendications 10, 11 ou 12, dans lequel la cassette à corps de chauffe est adaptée à des fins de connexion à l'Internet, de préférence
dans lequel la connexion à l'Internet est effectuée par le biais de l'unité de base, et/ou
dans lequel la cassette à corps de chauffe est adaptée pour fournir une connectivité à l'Internet.

14. Robot culinaire selon l'une quelconque des revendications 1 à 13,
dans lequel la cassette à corps de chauffe est adaptée, lors de l'utilisation, à chauffer les aliments transformés par le robot culinaire.

15. Robot culinaire selon la revendication 14, dans lequel le bol comporte un élément de corps de chauffe, et la cassette à corps de chauffe est agencée pour commander l'élément de corps de chauffe.
